# EUROPÄISCHE PATENTSCHRIFT

(11) **EP 1 162 051 B1**
(45) Veröffentlichungstag und Bekanntmachung des Hinweises auf die Patenterteilung: **02.08.2006**
(21) Anmeldenummer: 01111386.7
(22) Anmeldetag: 10.05.2001
(51) Int. Cl.: B29C 44/34, B29C 44/58

(54) **Verfahren und Vorrichtung zur Herstellung von geschäumten thermoplastischen Formteilen**
Methods and apparatus for producing foamed thermoplastics articles
Procédés et dispositif pour la production d'articles thermoplastiques expansés

(30) Priorität: 07.06.2000 DE 10028237
(43) Veröffentlichungstag der Anmeldung: 12.12.2001
(73) Patentinhaber: Fraunhofer-Gesellschaft zur Förderung der angewandten Forschung e.V., 80686 München (DE)
(72) Erfinder: Elsner, Peter, 76327 Pfinztal (DE); Krause, Wenzel, 76199 Karlsruhe (DE); Troster, Stefan, 76137 Karlsruhe (DE); Henning,Frank, 76327 Pfinztal (DE); Radtke, Andreas, 76227 Karlsruhe (DE); Walch, Michael, 76327 Pfinztal (DE)

(56) Entgegenhaltungen:
- EP-A- 0 376 064
- EP-A- 0 610 953
- EP-A- 0 809 257
- US-A- 3 619 438
- PATENT ABSTRACTS OF JAPAN vol. 2000, no. 04, 31. August 2000 (2000-08-31) -& JP 2000 025057 A (SUMITOMO CHEM CO LTD), 25. Januar 2000 (2000-01-25)

## Beschreibung

Die Erfindung betrifft ein Verfahren zur Herstellung von zumindest bereichsweise geschäumten Formteilen aus thermoplastischen und/oder thermoelastischen Polymeren mittels eines wenigstens zweiteiligen Formwerkzeugs, indem ein gegebenenfalls Verstärkungsfasern enthaltendes Polymer-Plastifikat und ein Treibmittel-Fluid oder ein gegebenenfalls faserverstärktes Polymer-Halbzeug und ein Treibmittel-Fluid in das Formwerkzeug eingebracht und das Halbzeug plastifiziert, das Plastifikat nach Schließen des Formwerkzeugs unter Druck zu dem Formteil geformt und durch Übergang des Treibmittel-Fluids aus einem überkritischen Zustand in einen unterkritischen Zustand aufgeschäumt wird. Ferner betrifft die Erfindung eine zur Durchführung dieses Verfahrens geeignete Vorrichtung zur Herstellung von zumindest bereichsweise geschäumten thermoplastischen und/oder thermoelastischen Formteilen.

Ein solches Verfahren und eine solche Vorrichtung sind aus der EP-A-0 972 626 bekannt.

Thermoplastische Polymere und hieraus durch Expansion hergestellte geschäumte Formteile finden vielfältige Verwendung, z. B. für Gehäuse, Isolationsbehälter, Sportgeräte, Kfz-Innenverkleidungsteile und Karosserieteile, wie Stoßfänger, Fronthauben oder dergleichen. Von besonderem Interesse ist ihr im Vergleich mit kompakten Formteilen geringeres Gewicht und die damit verbundene Materialersparnis. Umgekehrt können mit der gleichen Polymermenge größere Wandstärken und somit steifere Formteile erzeugt werden, die Lasten aufnehmen und übertragen können. Eine Verbesserung der mechanischen Eigenschaften kann durch den Einsatz von Verstärkungsfasern erzielt werden.

Häufig sind Formteile mit bereichsweise verschiedenen Eigenschaften, wie unterschiedlicher Dichte, Festigkeit oder dergleichen erwünscht, bei denen z. B. geschäumte Bereiche geringer Dichte und versteifende, kompakte Bereiche vorhanden sind, deren Orientierung je nach Beanspruchung des Formteils gewählt wird. Die Herstellung solcher Formteile geschieht in der Regel durch Verkleben der unterschiedlich strukturierten Werkstoffe, gegebenenfalls mit Lösungsmittel, was aufwendig und teuer ist und insbesondere bei Beanspruchungen zur Rißbildung im Bereich der Fügestellen oder zum Zerfall der Schaumstruktur führt.

Zur Herstellung von geschäumten Formteilen durch Preßformen ist es bekannt, chemische Treibmittel enthaltende Halbzeuge vorzufertigen und beim Aufschmelzen des Halbzeugs in einem Formwerkzeug das Treibmittel thermisch zu zersetzen und anläßlich der Bildung des Formteils unter Druck aufzuschäumen. Nachteilig ist, daß aufgrund des wenigstens zweimaligen Erwärmens des Polymermaterials, nämlich bei der Herstellung des mit dem Treibmittel versetzten Halbzeugs sowie bei der Plastifizierung des Halbzeugs während des Schäumens, die Gefahr einer thermischen Beeinträchtigung der Molekularstruktur besteht. Ferner können auf diese Weise nur durchgeschäumte Formteile erhalten werden.

Weiterhin ist es bekannt, einem Plastifikat mittels einer Begasungseinrichtung unter Druck, z. B. etwa 200 bar, physikalische Treibmittel, insbesondere Gase, zuzusetzen und diese in dem Plastifikat zu lösen. Anschließend wird das Plastifikat in ein druckfestes Formwerkzeug überführt und durch Absenken des Drucks im Formwerkzeug unter Freisetzen der gelösten Treibmittel aufgeschäumt. Alternativ wird das mit physikalischen Treibmitteln versetzte Plastifikat unter Druck abgekühlt, in das Formwerkzeug überführt und die Treibmittel durch Erwärmen unter Aufschäumen des Formteils expandiert. Beide Verfahren sind aufwendig und teuer und ermöglichen ebenfalls nur die Herstellung gänzlich geschäumter Formteile. Ferner sind die meisten Treibgase nur begrenzt in dem plastifizierten Polymer lösbar.

Um dem plastifizierten Polymer möglichst große Treibmittelmengen zuzusetzen, werden bereits überkritische Treibmittel-Fluide eingesetzt. Überkritische Fluide weisen bekanntermaßen für viele Stoffe ein sehr hohes Lösevermögen auf und können daher in verhältnismäßig großer Menge unter Bildung einer homogenen Lösung in das plastifizierte Polymer eindiffundiert werden.

Die EP 0 972 626 A2 beschreibt ein Verfahren zur Herstellung geschäumter Formteile, indem eine Polymerschmelze in einem Extruder mit überkritischem Kohlendioxid beaufschlagt und das Kohlendioxid in der Polymerschmelze gelöst wird. Die Polymerschmelze mit dem gelösten Treibmittel wird von dem Extruder in ein Formwerkzeug überführt, in welchem sie durch Expansion des überkritischen Kohlendioxids in einen unterkritischen Zustand unter Bildung des Formteils aufgeschäumt und abgekühlt wird. Das Formwerkzeug wird zuvor an einer Gasdruckquelle, insbesondere einer Stickstoff druckquelle, unter einen Druck gesetzt, der über dem kritischen Punkt des Treibmittels liegt, um zu verhindern, daß beim Überführen der Polymerschmelze das Treibmittel aus der Lösung geht. Sobald sich die für das Formteil notwendige Menge an Polymerschmelze im Formwerkzeug befindet, wird der Formraum expandiert, so daß sich unter Aufschäumen der Polymerschmelze das Formteil bildet.

Der DE 198 08 266 A1 ist ein Verfahren zur Herstellung von Kunststoffschäumen unter Einsatz von überkritischem Kohlendioxid entnehmbar, indem eine Komponente (Polyol) eines Polyurethans mit dem überkritischen Kohlendioxid beaufschlagt und in einer Mischeinrichtung mit einer zweiten Komponente (Isocyanat) des Polyurethans gemischt und die Mischung aufgeschäumt wird. Die geschäumte Mischung wird von der Mischeinrichtung in ein Formwerkzeug überführt und ausgehärtet.

Auch die vorgenannten Verfahren sind insbesondere in vorrichtungstechnischer Hinsicht aufwendig und teuer und erlauben ausschließlich die Herstellung durchgeschäumter Formteile.

Der Erfindung liegt die Aufgabe zugrunde, unter Vermeidung der vorgenannten Nachteile ein einfaches und kostengünstiges Verfahren zur Herstellung von geschäumten thermoplastischen oder thermoelastischen Formteilen vorzuschlagen, welches sowohl die Erzeugung gänzlich als auch nur bereichsweise geschäumter Formteile ermöglicht. Sie ist ferner auf eine Vorrichtung zur Durchführung eines solchen Verfahrens gerichtet.

Der verfahrenstechnische Teil dieser Aufgabe wird erfindungsgemäß bei einem Verfahren der eingangs genannten Art dadurch gelöst, daß das unterkritische Treibmittel-Fluid durch Schließen des Formwerkzeugs unter Kompression im Formraum in einen überkritischen Zustand überführt wird, wobei Druck und Temperatur im Formraum so eingestellt werden, daß das überkritische Fluid in das Plastifikat penetriert und gelöst wird, und daß das überkritische Fluid durch schnelle Druckabsenkung in den unterkritischen Zustand überführt und dabei das Plastifikat zumindest bereichsweise unter Bildung des Formteils aufschäumt und abgekühlt wird.

Die Erfindung geht aus von einem Verfahren gemäß der EP 0 972 626 A2. Demgegenüber besteht der Vorteil des erfindungsgemäßen Verfahrens insbesondere darin, daß während des Schließens des Formwerkzeugs zusätzlich Kompressionswärme freigesetzt und dies zum Überführen des Treibmittel-Fluids in einen überkritischen Zustand genutzt wird, in welchem es schnell in das Plastifikat penetriert und gelöst wird. Die Erfindung macht somit den Einsatz gesonderter Druckerzeugungs- und Heizeinrichtungen zum Überführen des Treibmittel-Fluids in den überkritischen Zustand entbehrlich, da es dem Plastifikat vor, während oder insbesondere nach Einbringen in das Formwerkzeug im unterkritischen Zustand zugesetzt und erst während der Formgebung des Plastifikats im Formwerkzeug beim Schließvorgang unter Kompression in einen Zustand im Bereich oder oberhalb seines kritischen Punktes überführt wird.

Ferner kann das Treibmittel-Fluid im Gegensatz zum Stand der Technik unmittelbar im Formwerkzeug zugesetzt und dort durch Schließen des Formwerkzeugs infolge Kompression im Formraum von einem unterkritischen Zustand in einen überkritischen Zustand überführt werden, so daß keine gesonderten Mischeinrichtungen zum Mischen des Plastifikates mit dem Treibmittel-Fluid erforderlich sind. Das in einen überkritischen Zustand überführte Treibmittel-Fluid weist im Vergleich zu herkömmlichen physikalischen Treibmitteln, insbesondere Gasen, eine außerordentlich hohe Diffusionsgeschwindigkeit beim Übertritt in das Plastifikat bei beherrschbar mäßigen Drucken auf. Hierfür sind nur vergleichsweise kurze Zykluszeiten erforderlich. Durch schnelle Druckabsenkung zum Überführen des Fluids in einen unterkritischen Zustand ist dann ein direktes Schäumen im Formwerkzeug möglich.

Bei Druckentlastung der Form geht das überkritische Fluid spontan wieder in einen unterkritischen gasförmigen Zustand über, was mit einer rapiden Abnahme seiner Löslichkeit und einer entsprechenden Volumenzunahme verbunden ist. Das expandierte Fluid erzeugt insbesondere mikrozellulare und homogene Schaumstrukturen, die durch rasches Abkühlen zum Formteil in bekannter Weise eingefroren werden. Die Schaumstruktur läßt sich durch die zugeführte und in dem Plastifikat gelöste Menge an überkritischem Fluid sowie durch den Druckgradienten beim Entspannen beeinflussen.

Durch den schnellen Druckaufbau und Druckabbau kann im Formwerkzeug von einer adiabaten Zustandsänderung ausgegangen werden. Bei geeigneter Steuerung der Schließ- und Öffnungsbewegung des Formwerkzeugs läßt sich nicht nur die Kompressionswärme beim Formgebungsprozeß zum Überführen des Treibmittel-Fluids in einen überkritischen Zustand und somit zum Lösen desselben im Plastifikat, sondern auch die Entspannungsenthalpie bei der Druckentlastung zur Abkühlung des Formteils nutzen, wodurch sich die Zykluszeiten gegenüber herkömmlichen Schäumverfahren verringern.

Das erfindungsgemäße Verfahren ermöglicht somit insbesondere die direkte Herstellung von geschäumten Formteilen durch Preßformen, indem das Plastifikat beispielsweise mittels eines Extruders, einer Spritzgießmaschine oder dergleichen in das Formwerkzeug eingebracht und nach gasdichtem Abschließen desselben mit dem Treibmittel-Fluid beaufschlagt wird. Sodann wird das Formwerkzeug geschlossen und das Treibmittel-Fluid in einen überkritischen Zustand überführt, um es in dem Plastifikat zu lösen. Nach anschließendem Entspannen des Formraums wird das Plastifikat aufgeschäumt und zum Formteil abgekühlt. In diesem Fall wird das Polymer im Laufe des Herstellungsprozesses des geschäumten Formteils nur ein einziges Mal plastifiziert und somit eine thermische Schädigung der Polymermatrix weitestgehend vermieden. Alternativ kann aber auch ein beispielsweise vorgefertigtes thermoplastisches und/oder thermoelastisches Halbzeug in das Formwerkzeug eingebracht und erst dort plastifiziert, mit einem Treibmittel-Fluid versetzt und dieses durch Schließen des Formwerkzeugs in einen überkritischen Zustand überführt werden, um es in dem plastifizierten Halbzeug zu lösen. Nach Entspannen des Formraums wird das plastifizierte Halbzeug dann in entsprechender Weise zum Formteil aufgeschäumt und anschließend abgekühlt. In beiden Fällen können Verstärkungsfasern, insbesondere auch Langfasern, in das Polymer eingebaut sein.

Das Verfahren wird vorzugsweise so ausgeführt, daß der Formraum beim Schließen des Formwerkzeugs auf ein kleineres Volumen als das des fertigen Formteils unter Aufrechterhaltung der überkritischen Bedingungen für das Treibmittel-Fluid bis zum vollständigen Ausfüllen des kleineren Volumens durch das Plastifikat reduziert, anschließend das Formwerkzeug unter Druckentlastung und Aufschäumen des Plastifikats bis zum Erreichen des Volumens des fertigen Formteils geöffnet, das dabei aufgeschäumte Formteil gekühlt und anschließend das Formwerkzeug vollständig geöffnet wird.

Das Plastifikat kann einerseits im wesentlichen über sein gesamtes Volumen unter Bildung eines durchgeschäumten Formteils aufgeschäumt werden, indem das Treibmittel-Fluid in das gesamte Volumen des Plastifikats penetriert wird.

Die Erfindung gibt andererseits aber auch die Möglichkeit, das Treibmittel-Fluid in diskrete Bereiche des Plastifikats zu penetrieren und das Plastifikat unter Bildung eines bereichsweise geschäumten Formteils aufzuschäumen. Auf diese Weise können Formteile mit bereichsweise verschiedenen Eigenschaften, wie unterschiedlicher Dichte, Festigkeit oder dergleichen, unter Vermeidung von Lösungsmitteln, Klebern oder dergleichen hergestellt werden. Hierbei kann das Plastifikat beispielsweise nur lokal begrenzt mit dem Treibmittel-Fluid beaufschlagt und in diesem Bereich aufgeschäumt werden, wobei außerhalb dieses Bereichs das fertige Formteil versteifende, kompakte Bereiche erzeugt werden. Selbstverständlich kann das Plastifikat auch nur in mehreren, lokal getrennten Bereichen mit dem Treibmittel-Fluid beaufschlagt und in diesen Bereichen aufgeschäumt werden, wobei zwischen den geschäumten Bereichen mehr oder minder ungeschäumte bzw. kompakte Bereiche erzeugt werden, die zur Versteifung des erhaltenen Formteils dienen. Letztere können je nach zu erwartender Beanspruchung des Formteils in der entsprechenden Raumrichtung angeordnet werden. Alternativ oder zusätzlich kann das Treibmittel-Fluid auch nur in Randbereiche des Plastifikats penetriert und das Plastifikat unter Bildung eines im Randbereich geschäumten Formteils mit kompaktem Kern aufgeschäumt werden, was insbesondere durch geeignete Steuerung der Penetrations- bzw. Diffusions- und Lösungszeit des nach Schließen des Formwerkzeugs in einen überkritischen Zustand überführten Treibmittel-Fluids geschehen kann. Umgekehrt kann ein mittels des erfindungsgemäßen Verfahrens hergestelltes gänzlich, teilweise oder vorgeschäumtes Formteil selbstverständlich auch als Kern für Sandwichbauteile mit mehr oder minder kompakten Schichten zum Einsatz kommen, wobei einem solchen Sandwichbauteil insbesondere das geringe Gewicht des geschäumten Kerns zunutze kommt.

In Weiterbildung der Erfindung ist vorgesehen, daß der Druck im Formraum des Formwerkzeugs zum bereichsweisen Aufschäumen des Formteils nur bereichsweise entlastet wird, indem beispielsweise der Formraum des Formwerkzeugs unter Bildung eines Expansionsraums teilweise erweitert und das geschäumte Plastifikat in diesem Raum expandiert wird. Auf diese Weise können dreidimensionale Strukturen mit Überhöhungen am Formteil oder Oberflächenstrukturen erzeugt werden, wobei die Stärke dieser Strukturen durch unterschiedliche Erweiterung des Formraums variiert werden kann. Derart sind einerseits verschiedene geschäumte Formteile mit einem einzigen Formwerkzeug herstellbar, andererseits können durch Erweiterung des Formraums während des Aufschäumens auch komplizierte geschäumte Formteile erzeugt werden, da aufgrund der Expansion des Treibmittel-Fluids au dem überkritischen Zustand und der damit verbundenen schlagartigen Volumenzunahme ein vollständiges Eindringen des Plastifikats in die Erweiterung des Formraums sichergestellt wird.

In weiterhin vorteilhafter Ausführung ist vorgesehen, daß der Druck im Formraum erst nach Bildung einer Integralhaut durch oberflächiges Abkühlen des Plastifikats entlastet wird. Dadurch wird eine Oberfläche des erzeugten Formteils mit mechanisch und optisch verbesserten Eigenschaften erhalten.

Um sichtbare Injektionsspuren an dem Formteil durch das in das Formwerkzeug eingebrachte Treibmittel-Fluid zuverlässig zu vermeiden, ist in bevorzugter Ausführung vorgesehen, daß das Treibmittel-Fluid außerhalb des eigentlichen Formraums, aber innerhalb eines von Ober- und Unterwerkzeug verschlossenen Kompressionsraums eingespeist und beim Schließen des Formwerkzeugs in den Formraum verdrängt wird. Alternativ oder zusätzlich kann das Treibmittel-Fluid auch fein verteilt, z. B. über poröse Abschnitte des Formwerkzeugs, in den Formraum eingespeist werden.

Bevorzugt werden Treibmittel-Fluide eingesetzt, die aus der Gasphase in einen überkritischen Zustand übergehen und somit eine Trocknung des Formteils entbehrlich machen. Als solches bei Normalbedingungen gasförmiges Fluid kommt beispielsweise Kohlendioxid in Frage.

Die Erfindung betrifft ferner eine Vorrichtung zur Herstellung von zumindest bereichsweise geschäumten thermoplastischen und/oder thermoelastischen Formteilen durch Preßformen, zur Durchführung eines Verfahrens der vorgenannten Art, gemäß Anspruch 16.

Der Kompressionsraum ermöglicht ein direktes Einspeisen des Treibmittel-Fluids in das Formwerkzeug, wobei das Fluid beim Schließen des Formwerkzeugs von dem Kompressionsraum in den eigentlichen Formraum verdrängt und in das dort untergebrachte Polymer-Plastifikat penetriert wird.

Dadurch, daß das Formwerkzeug eine steuerbare, im geschlossenen Zustand lokal wirksame Druckentlastung aufweist, ist es möglich, die Schaumbildung dem jeweiligen Bedarfsfall anzupassen und nur bereichsweise geschäumte Formteile zu erzeugen. Durch diese nur lokal begrenzte Drukkentlastung wird das Plastifikat auch nur in diesem Bereich aufgeschäumt und entweicht aus den übrigen Bereichen gelöstes Fluid in den druckentlasteten Bereich.

In bevorzugter Ausführung weist die Zuleitung wenigstens einen mit dem Kompressionsraum außerhalb des eigentlichen Formraums korrespondierenden Mündungskanal auf, so daß sichtbare Injektionsspuren am Formteil durch das in den Formraum des Formwerkzeugs eingebrachte Treibmittel-Fluid sicher und zuverlässig vermieden werden.

Um ein nur bereichsweises oder ein bereichsweise stärkeres Aufschäumen des Plastifikats zu gewährleisten ist vorgesehen, daß die Zuleitung wenigstens einen mit dem Formraum korrespondierenden Verteiler aufweist. Der Verteiler kann beispielsweise aus einem porösen Material bestehen und insbesondere in Form eines Sintermetalleinsatzes verwirklicht sein, so daß das Treibmittel-Fluid in fein dispergierter Form in das Plastifikat eingeleitet wird. Ein zur Begasung einer Polymerschmelze dienendes Formwerkzeug mit Sintermetalleinsätzen ist an sich beispielsweise aus der DE 198 53 021 A1 bekannt.

Zum Dosieren des jeweils eingesetzten Treibmittel-Fluids sowie zur schnellen Druckabsenkung desselben in einen unterkritischen Bereich unter Aufschäumen des Polymer-Plastifikats weist die Zuleitung vorzugsweise eine Mengen- und Drucksteuerung, wie ein Drucksteuerventil, auf.

Die lokal begrenzte Druckentlastung läßt sich dadurch verwirklichen, daß das Unter- und/oder Oberwerkzeug einen beim Öffnen des Formwerkzeugs zur Druckentlastung in Position bleibenden Formkern aufweist. In diesem Fall wird das gesamte Formteil mit Ausnahme des vom Formkern unter Druck gehaltenen Bereichs aufgeschäumt.

Statt dessen kann vorgesehen sein, daß das Unter- und/oder Oberwerkzeug wenigstens einen im geschlossenen Zustand des Formwerkzeugs freilegbaren Expansionsraum aufweist. In diesem Fall dringt das Plastifikat in den Expansionsraum unter Aufschäumen des gesamten umgebenden Bereichs ein. Eine konstruktive Lösung besteht darin, daß in dem Expansionsraum ein verlagerbarer, einen Teil der Formkontur des Formraums bildender Schieber angeordnet ist, wobei der Schieber entweder zur Druckentlastung in die Ausnehmung unter Eindringen und Aufschäumen des Plastifikats eintaucht oder aber beim Öffnen des Formwerkzeugs den in Position bleibenden Formkern bildet und nach Abkühlen des Formteils nachführbar ist.

Alternativ oder zusätzlich kann das Unter- und/oder Oberwerkzeug einen während des Aufschäumens in das noch verformbare Formteil eindringenden Formkern aufweisen, um bereits geschäumte Bereiche nachzuformen, gegebenenfalls auch zu verdichten.

Weiterhin von Vorteil sind den Formraum umgebende Fluidkanäle zum Temperieren des Formwerkzeugs, z. B. zum Vorwärmen und/oder Abkühlen des Formraums.

Nachstehend ist die Erfindung anhand von Ausführungsbeispielen unter Bezugnahme auf die Zeichnung näher erläutert.

In der Zeichnung zeigen:
- Fig.1: einen schematischen Verfahrensablauf;
- Fig.2: eine Ausführungsform eines Formwerkzeugs in schematischem Schnitt und
- Fig.3: eine abgewandelte Ausführungsform eines Formwerkzeugs.

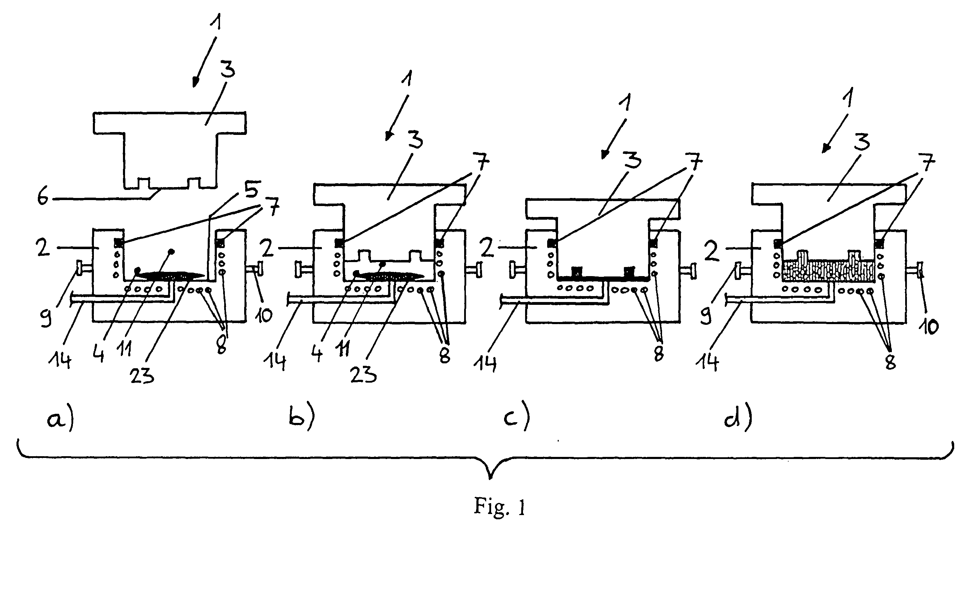

Fig. 1 zeigt ein zweiteiliges Formwerkzeug 1 mit einem Unterwerkzeug 2 mit einer Formkontur 5 und einem mit einer komplementären Formkontur 6 ausgestatteten Oberwerkzeug 3. Das Unter- 2 und das Oberwerkzeug 3 begrenzen einerseits den eigentlichen Formraum 4, andererseits einen sich an diesen nach oben anschließenden Kompressionsraum 11 zur Aufnahme eines Treibmittel-Fluids. Im Bereich des Übergriffs von Unter- 2 und Oberwerkzeug 3 ist eine innenseitig am Unterwerkzeug 2 angeordnete Dichtung 7 zur druckdichten Abdichtung sowohl des Formraums 4 als auch des Kompressionsraums 11 angeordnet. Zum Temperieren des Formraums 4 können Fluidkanäle 8 vorgesehen sein, die in der gezeigten Ausführung im Unterwerkzeug 2 angeordnet sind und über einen Einlaß 9 und einen Auslaß 10 mit einem Temperiermedium beaufschlagbar sind. Das Formwerkzeug 1 ist mit einer Zuleitung 14 für ein Treibmittel-Fluid versehen, die bei dem Ausführungsbeispiel gemäß Fig. 1 in dem Unterwerkzeug 2 mündet. Der Verfahrensablauf ist wie folgt:

In den Formraum 4 des geöffneten Formwerkzeug 1 (Fig. 1a) wird ein Polymer-Plastifikat 23, das gegebenenfalls faserverstärkt ist, mittels eines Extruders oder dergleichen eingebracht und anschließend das Formwerkzeug 1 gasdicht abgeschlossen, wobei das Oberwerkzeug 3 in das Unterwerkzeug 2 eintaucht und der Formraum 4 sowie der Kompressionsraum 11 über die umlaufende Dichtung 7 druckdicht abgeschlossen werden (Fig. 1b). In dieser Position wird das unterkritische Treibmittel-Fluid über die Zuleitung 14 zugesetzt, so daß es den Formraum 4 um das Plastifikat 23 und den oberhalb desselben angeordneten Kompressionsraum 11 im wesentlichen ausfüllt. Die im Kompressionsraum 11 vorhandene Luft kann gegebenenfalls über nicht gezeigte Entlüftungskanäle verdrängt werden, die entweder durch Überfahren mit dem Oberwerkzeug 3 oder durch gesonderte Steuerventile geschlossen werden.

Durch weiteres Zufahren des Oberwerkzeugs 3 wird das Treibmittel-Fluid aus dem Kompressionsraum 11 in den Formraum 4 verdrängt und infolge Kompression und gegebenenfalls äußerer Erwärmung in einen überkritischen Zustand überführt, in dem es aufgrund seiner hohen Diffusionsgeschwindigkeit in das Plastifikat 23 eindringt, um darin gelöst zu werden. Schließlich erreicht das Oberwerkzeug 3 seine Endposition (Fig. 1c), in der das nun überkritische Fluid in dem noch weichplastischen Polymer weitestgehend gelöst ist. Beim anschließenden Öffnen des Formwerkzeugs 1 durch Ausfahren des Oberwerkzeugs 3 sinkt der Lösungsdruck und wird zugleich der kritische Punkt des Fluids wieder unterschritten, so daß es in die Gasphase übergeht. Dadurch schäumt das Polymer unter Bildung fein verteilter Gasbläschen auf. Durch entsprechende Temperierung des Formwerkzeugs 1 kann das Plastifikat an der Oberfläche so weit abgekühlt werden, daß sich eine Integralhaut bildet, so daß ein aufgeschäumtes Formteil mit geschlossener glatter Oberfläche erhalten wird (Fig. 1d). Ist das Formteil ausreichend abgekühlt, wird es aus dem geöffneten Formwerkzeug 1 entnommen (nicht dargestellt).

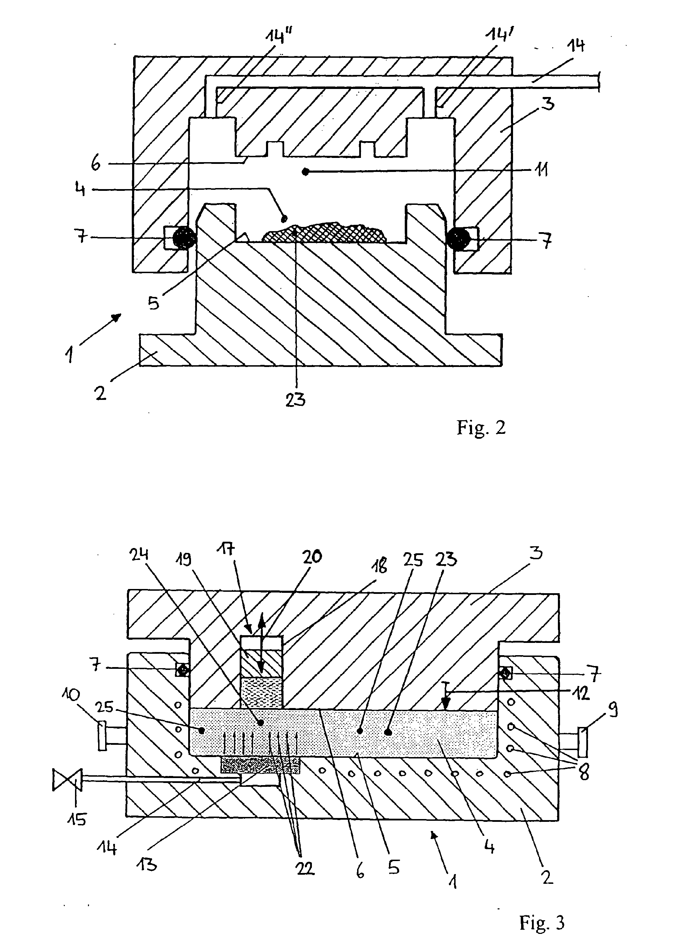

Das in Fig. 2 gezeigte Formwerkzeug 1 unterscheidet sich von dem der Fig. 1 im wesentlichen nur dadurch, daß die Zuleitung 14 für das Treibmittel-Fluid im Oberwerkzeug 3 angeordnet ist und mehrere mit dem Kompressionsraum 11 außerhalb des eigentlichen Formraums 4, aber innerhalb der Abdichtung 7 korrepondierende Mündungskanäle 14', 14'' aufweist, um eine schnellere Füllung des Formraums 4 bei geringem Druckverlust zu ermöglichen und insbesondere Injektionsspuren am Formteil durch das eingebrachte Treibmittel-Fluid zu vermeiden. Die Betriebsweise dieses Formwerkzeugs 1 entspricht im wesentlichen der gemäß Fig. 1.

Fig. 3 zeigt eine Ausführungsform eines Formwerkzeugs 1, das die Herstellung eines nur bereichsweise geschäumten Formteils ermöglicht. Die Zuleitung 14, die mit einem Steuerventil 15 versehen ist, mündet im Formraum 4 an einem einen Teil der Formkontur 5 des Unterwerkzeugs 2 bildenden porösen Verteiler 13, z. B. aus Sintermetall. An einem dem Verteiler 13 etwa gegenüberliegenden Bereich weist das Oberwerkzeug 3 einen Expansionsraum 18 in Form einer Ausnehmung 17 auf, in der ein Schieber 19 nach Art eines Kolbens in Richtung Pfeil 20 vertikal bewegbar ist. Der oberhalb des Formraums 4 angeordnete Kompressionsraum des Formwerkzeugs 1 ist in der dargestellten Position bereits von dem Oberwerkzeug 3 überfahren worden (Pfeil 12).

Zur Herstellung eines bereichsweise geschäumten thermoplastischen Formteils wird z. B. ein gegebenenfalls Verstärkungsfasern enthaltendes Plastifikat 23 mittels eines Extruders, einer Spritzgießmaschine oder dergleichen in das offene Formwerkzeug 1 eingebracht und das Formwerkzeug 1 gasdicht verschlossen. Gleichzeitig oder zuvor wird der Formraum 4 z. B. durch Beaufschlagen der Fluidkanäle 8 über den Einlaß 9 und den Auslaß 10 mit einem Heizmedium erwärmt. Noch vor dem Auftreffen des Oberwerkzeugs 3 auf das Plastifikat 23 wird in dieses im Bereich 24 über den Verteiler 13 ein Treibmittel-Fluid 22 fein verteilt eindispergiert und der Formraum 4 des Formwerkzeugs 1 durch Zufahren des Oberwerkzeugs 3 über den Kompressionsraum (Pfeil 12) hinaus komprimiert, um das Treibmittel-Fluid 22 in einen überkritischen Zustand zu überführen und spontan in dem Plastifikat 23 im Bereich 24 zu lösen.

Daraufhin wird der in der Ausnehmung 17 geführte Schieber 19 in Richtung Pfeil 20 eingefahren, wobei das mit dem Treibmittel 22 versetzte Plastifikat 23 in die Ausnehmung 17 ausweicht. Aufgrund der Druckabsenkung wird das Treibmittel-Fluid 22 wieder in einen unterkritischen Zustand überführt, wobei es aus der Lösung geht und das Plastifikat im Bereich 24 aufschäumt. Gegebenenfalls kann das Oberwerkzeug 3 mit geringer Zeitverzögerung angehoben werden, so daß auch der übrige Bereich des Formteils, gegebenenfalls nur geringfügig, aufgeschäumt wird. Schließlich wird das bereichsweise geschäumte Plastifikat 23 durch Beaufschlagen der Fluidkanäle 8 mit einem Kühlmedium unter Bildung des fertigen Formteils rasch abgekühlt.

Das auf diese Weise erhaltene Formteil weist einen geschäumten Bereich 24 mit einem durch die Ausnehmung 17 gebildeten geschäumten Ansatz sowie an den geschäumten Bereich 24 angrenzende, mehr oder minder kompakte Bereiche 25 auf, wobei der Übergang von Schaumstruktur zu kompakter Struktur fließend ist, was dem Formteil eine hohe Dauerfestigkeit verleiht. Der Schieber 19 kann auch als Formkern beim Anheben des Oberwerkzeugs 3 in Position verbleiben, so daß der gesamte übrige Bereich auf das gewünschte Maß aufgeschäumt wird, während das Formteil im Bereich des Schiebers 19 kompakt bleibt.

Alternativ können durch Anordnung mehrerer mit dem Formraum 4 korrespondierender Expansionsräume 17 auch Formteile mit sandwichartig zwischen kompakten Bereichen angeordneten geschäumten Bereichen oder gänzlich geschäumte Formteile erzeugt werden. In jedem Fall ist eine direkte Herstellung solcher geschäumter Formteile möglich.

## Patentansprüche

1. Verfahren zur Herstellung von zumindest bereichsweise geschäumten Formteilen aus thermoplastischen und/oder thermoelastischen Polymeren mittels eines wenigstens zweiteiligen Formwerkzeugs (1), indem ein gegebenenfalls Verstärkungsfasern enthaltendes Polymer-Plastifikat (23) und ein Treibmittel-Fluid (22) in das Formwerkzeug (1) eingebracht, das Plastifikat (23) nach Schließen des Formwerkzeugs (1) unter Druck zu dem Formteil geformt und durch Übergang des Treibmittel-Fluids (22) aus einem überkritischen Zustand in einen unterkritischen Zustand aufgeschäumt wird, **dadurch gekennzeichnet, daß** das unterkritische Treibmittel-Fluid (22) durch Schließen des Formwerkzeugs (1) unter Kompression im Formraum (4) in einen überkritischen Zustand überführt wird, wobei Druck und Temperatur im Formraum (4) so eingestellt werden, daß das überkritische Fluid (22) in das Plastifikat (23) penetriert und gelöst wird, und daß das überkritische Fluid (22) durch schnelle Druckabsenkung in den unterkritischen Zustand überführt und dabei das Plastifikat (23) zumindest bereichsweise unter Bildung des Formteils aufschäumt und abgekühlt wird.

2. Verfahren zur Herstellung von zumindest bereichsweise geschäumten Formteilen aus thermoplastischen und/oder thermoelastischen Polymeren mittels eines wenigstens zweiteiligen Formwerkzeugs (1), indem ein gegebenenfalls faserverstärktes Polymer-Halbzeug und ein Treibmittel-Fluid (22) in das Formwerkzeug (1) eingebracht, das Halbzeug plastifiziert und das Plastifikat (23) beim Schließen des Formwerkzeugs (1) unter Druck zu dem Formteil geformt und durch Übergang des Treibmittel-Fluids (22) aus einem überkritischen Zustand in einen unterkritischen Zustand aufgeschäumt wird, **dadurch gekennzeichnet, daß** das unterkritische Treibmittel-Fluid (22) durch Schließen des Formwerkzeugs (1) unter Kompression im Formraum (4) in einen überkritischen Zustand überführt wird, wobei Druck und Temperatur im Formraum (4) so eingestellt werden, daß das überkritische Fluid (22) in das Plastifikat (23) penetriert und gelöst wird, und daß das überkritische Fluid (22) durch schnelle Druckabsenkung in den unterkritischen Zustand überführt und dabei das Plastifikat (23) zumindest bereichsweise unter Bildung des Formteils aufschäumt und abgekühlt wird.

3. Verfahren nach Anspruch 1 oder 2, **dadurch gekennzeichnet, daß** der Formraum (4) beim Schließen des Formwerkzeugs (1) auf ein kleineres Volumen als das des fertigen Formteils unter Aufrechterhaltung der überkritischen Bedingungen für das Treibmittel-Fluid (22) bis zum vollständigen Ausfüllen des kleineren Volumens durch das Plastifikat (23) reduziert, anschließend das Formwerkzeug (1) unter Druckentlastung und Aufschäumen des Plastifikats (23) bis zum Erreichen des Volumens des fertigen Formteils geöffnet, das dabei aufgeschäumte Formteil gekühlt und anschließend das Formwerkzeug (1) vollständig geöffnet wird.

4. Verfahren nach einem der Ansprüche 1 bis 3, **dadurch gekennzeichnet, daß** das Treibmittel-Fluid (22) in das gesamte Volumen des Plastifikats (23) penetriert und das Plastifikat (23) unter Bildung eines durchgeschäumten Formteils aufgeschäumt wird.

5. Verfahren nach einem der Ansprüche 1 bis 3, **dadurch gekennzeichnet, daß** das Treibmittel-Fluid (22) in diskrete Bereiche des Plastifikats (23) penetriert und das Plastifikat (23) unter Bildung eines bereichsweise geschäumten Formteils aufgeschäumt wird.

6. Verfahren nach Anspruch 5, **dadurch gekennzeichnet, daß** das Plastifikat (23) nur lokal begrenzt mit dem Treibmittel-Fluid (22) beaufschlagt und in diesem Bereich (24) aufgeschäumt wird, wobei außerhalb dieses Bereichs (24) das fertige Formteil versteifende, kompakte Bereiche (25) erzeugt werden.

7. Verfahren nach Anspruch 5, **dadurch gekennzeichnet, daß** das Plastifikat (23) nur in mehreren, lokal getrennten Bereichen (24) mit dem Treibmittel-Fluid (22) beaufschlagt und in diesen Bereichen (24) aufgeschäumt wird, wobei zwischen diesen Bereichen (24) das fertige Formteil versteifende, kompakte Bereiche (25) erzeugt werden.

8. Verfahren nach Anspruch 5, **dadurch gekennzeichnet, daß** das Treibmittel-Fluid (22) nur in Randbereiche des Plastifikats (23) penetriert und das Plastifikat (2) unter Bildung eines im Randbereich geschäumten Formteils mit kompakten Kern aufgeschäumt wird.

9. Verfahren nach einem der Ansprüche 1 bis 8, **dadurch gekennzeichnet, daß** der Druck im Formraum (4) des Formwerkzeugs (1) zum bereichsweise Aufschäumen des Formteils nur bereichsweise entlastet wird.

10. Verfahren nach Anspruch 9, **dadurch gekennzeichnet, daß** der Formraum (4) des Formwerkzeugs (1) unter Bildung eines Expansionsraums (17) teilweise erweitert und das geschäumte Plastifikat (23) in diesen Raum expandiert wird.

11. Verfahren nach einem der Ansprüche 1 bis 10, **dadurch gekennzeichnet, daß** der Druck im Formraum (4) erst nach Bildung einer Integralhaut durch oberflächiges Abkühlen des Plastifikats (23) entlastet wird.

12. Verfahren nach einem der Ansprüche 1 bis 11, **dadurch gekennzeichnet, daß** das Treibmittel-Fluid (22) außerhalb des eigentlichen Formraums (4), aber innerhalb eines von Ober- (3) und Unterwerkzeug (2) verschlossenen Kompressionsraums (11) eingespeist und beim Schließen des Formwerkzeugs in den Formraum (4) verdrängt wird.

13. Verfahren nach einem der Ansprüche 1 bis 11, **dadurch gekennzeichnet, daß** das Treibmittel-Fluid (22) fein verteilt in den Formraum (4) eingespeist wird.

14. Verfahren nach einem der Ansprüche 1 bis 13, **dadurch gekennzeichnet, daß** Treibmittel-Fluide (22) eingesetzt werden, die aus der Gasphase in einen überkritischen Zustand übergehen.

15. Verfahren nach einem der Ansprüche 1 bis 14, **dadurch gekennzeichnet, daß** als Treibmittel-Fluid (22) Kohlendioxid eingesetzt wird.

16. Vorrichtung zur Herstellung von zumindest bereichsweise geschäumten thermoplastischen und/oder thermoelastischen Formteilen durch Preßformen, zur Durchführung des Verfahrens nach einem der Ansprüche 1 bis 15, mit einem wenigstens zweiteiligen, einen Formraum (4) begrenzenden druckdichten Formwerkzeug (1) mit einem Ober- (3) und einem Unterwerkzeug (2), wenigstens einer Zuleitung (14) zum Beaufschlagen des Formraums (4) mit einem Treibmittel-Fluid (22) und einer im Bereich des Übergriffs von Ober- (3) und Unterwerkzeug (2) angeordneten gasdichten Abdichtung (7), wobei innerhalb des von Ober- (3) und Unterwerkzeug (2) gasdicht verschlossenen Raums ein außerhalb des eigentlichen Formraums (4) angeordneter, mit dem Formraum (4) verbundener Kompressionsraum (11) zur Aufnahme des Treibmittel-Fluids (22) vorgesehen ist, und wobei das Formwerkzeug (1) eine steuerbare, im geschlossenen Zustand lokal wirksame Druckentlastung aufweist.

17. Vorrichtung nach Anspruch 16, **dadurch gekennzeichnet, daß** die Zuleitung (14) wenigstens einen mit dem Kompressionsraum (11) außerhalb des eigentlichen Formraums (4) korrespondierende Mündungskanal (14', 14'') aufweist.

18. Vorrichtung nach Anspruch 16, **dadurch gekennzeichnet, daß** die Zuleitung (14) wenigstens einen mit dem Formraum (4) korrespondierenden Verteiler (13) aufweist.

19. Vorrichtung nach Anspruch 18, **dadurch gekennzeichnet, daß** der Verteiler (13) aus einem porösen Material besteht.

20. Vorrichtung nach Anspruch 18 oder 19, **dadurch gekennzeichnet, daß** der Verteiler (13) ein Sintermetalleinsatz ist.

21. Vorrichtung nach einem der Ansprüche 16 bis 20, **dadurch gekennzeichnet, daß** die Zuleitung (14) eine Mengen- und Drucksteuerung, wie ein Drucksteuerventil (15), aufweist.

22. Vorrichtung nach einem der Ansprüche 16 bis 21, **dadurch gekennzeichnet, daß** das Unter- (3) und/oder Oberwerkzeug (2) einen beim druckentlastenden Öffnen des Formwerkzeugs (1) in Position bleibenden Formkern aufweist.

23. Vorrichtung nach einem der Ansprüche 16 bis 21, **dadurch gekennzeichnet, daß** das Unter- (3) und/oder Oberwerkzeug (2) wenigstens einen im geschlossenen Zustand des Formwerkzeugs (1) freilegbaren Expansionsraum (17) aufweist.

24. Vorrichtung nach Anspruch 23, **dadurch gekennzeichnet, daß** in dem Expansionsraum (17) ein verlagerbarer, einen Teil der Formkontur des Formraums (4) bildender Schieber (19) angeordnet ist.

25. Vorrichtung nach Anspruch 24, **dadurch gekennzeichnet, daß** der Schieber (19) zur Druckentlastung in den Expansionsraum (17) unter Eindringen und Aufschäumen des Plastifikats (22) eintaucht.

26. Vorrichtung nach Anspruch 25, **dadurch gekennzeichnet, daß** der Schieber (17) beim Öffnen des Formwerkzeugs (1) den in Position bleibenden Formkern bildet und nach Abkühlen des Formteils nachführbar ist.

27. Vorrichtung nach einem der Ansprüche 16 bis 26, **dadurch gekennzeichnet, daß** das Unter- (3) und/oder Oberwerkzeug (2) einen während des Aufschäumens in das noch verformbare Formteil eindringenden Formkern aufweist.

28. Vorrichtung nach einem der Ansprüche 16 bis 27, **dadurch gekennzeichnet, daß** den Formraum (4) umgebende Fluidkanäle (8) zum Temperieren des Formwerkzeugs (1) vorgesehen sind.

## Claims

1. Method for producing moulded articles which are foamed at least in regions, made of thermoplastic and/or thermoelastic polymers by means of an at least two-part mould (1), a polymer plasticate (23), possibly containing reinforcing fibres, and a foaming agent fluid (22) being introduced into the mould (1), the plasticate (23) being formed under pressure into the moulded article after closure of the mould (1) and being foamed by transition of the foaming agent fluid (22) from a supercritical state into a subcritical state, **characterised in that** the subcritical foaming agent fluid (22) is converted into a supercritical state by closure of the mould (1) under compression in the moulding chamber (4), pressure and temperature in the moulding chamber (4) being adjusted such that the supercritical fluid (22) penetrates and is dissolved in the plasticate (23), and **in that** the supercritical fluid (22) is converted into the subcritical state by rapid pressure drop and the plasticate (23) is thereby foamed and cooled at least in regions when forming the moulded article.

2. Method for producing moulded articles which are foamed at least in regions, made of thermoplastic and/or thermoelastic polymers by means of an at least two-part mould (1), a possibly fibre- reinforced semifinished polymer article and a foaming agent fluid (22) being introduced into the mould (1), the semifinished article being plasticised and the plasticate (23) being moulded under pressure into the moulded article during closure of the mould (1) and being foamed by transition of the foaming agent fluid (22) from a supercritical state into a subcritical state, **characterised in that** the subcritical foaming agent fluid (22) is converted into a supercritical state by closure of the mould (1) under compression in the moulding chamber (4), pressure and temperature in the moulding chamber (4) being adjusted such that the supercritical fluid (22) penetrates and is dissolved in the plasticate (23), and **in that** the supercritical fluid (22) is converted into the subcritical state by rapid pressure drop and the plasticate (23) is thereby foamed and cooled at least in regions when forming the moulded article.

3. Method according to claim 1 or 2, **characterised in that** the moulding chamber (4), upon closure of the mould (1), is reduced to a smaller volume than that of the finished moulded article whilst maintaining the supercritical conditions for the foaming agent fluid (22) until complete filling of the smaller volume by the plasticate (23), subsequently the mould (1) is opened with pressure release and foaming of the plasticate (23) until achieving the volume of the finished moulded article, the thereby foamed moulded article is cooled and subsequently the mould (1) is completely opened.

4. Method according to one of the claims 1 to 3, **characterised in that** the foaming agent fluid (22) penetrates into the entire volume of the plasticate (23) and the plasticate (23) is foamed forming a moulded article which is foamed throughout.

5. Method according to one of the claims 1 to 3, **characterised in that** the foaming agent fluid (22) penetrates into discrete regions of the plasticate (23) and the plasticate (23) is foamed forming a moulded article which is foamed in regions.

6. Method according to claim 5, **characterised in that** the plasticate (23) is supplied with the foaming agent fluid (22) only in a locally delimited manner and is foamed in this region (24), compact regions (25) reinforcing the finished moulded article being produced outwith this region (24).

7. Method according to claim 5, **characterised in that** the plasticate (23) is supplied with the foaming agent fluid (22) only in a plurality of locally separated regions (24) and is foamed in these regions (24), compact regions (25) reinforcing the finished moulded article being produced between these regions (24).

8. Method according to claim 5, **characterised in that** the foaming agent fluid (22) penetrates only into edge regions of the plasticate (23) and the plasticate (2) is foamed forming a moulded article which is foamed in the edge region with a compact core.

9. Method according to one of the claims 1 to 8, **characterised in that** the pressure in the moulding chamber (4) of the mould (1) is released only in regions for foaming of the moulded article in regions.

10. Method according to claim 9, **characterised in that** the moulding chamber (4) of the mould (1) is partially extended forming an expansion chamber (17) and the foamed plasticate (23) is expanded in this chamber.

11. Method according to one of the claims 1 to 10, **characterised in that** the pressure in the moulding chamber (4) is released only after forming an integral skin by surface cooling of the plasticate (23).

12. Method according to one of the claims 1 to 11, **characterised in that** the foaming agent fluid (22) is supplied outwith the actual moulding chamber (4) but within a compression chamber (11) which is closed by the upper (3) and lower mould (2) and is displaced into the moulding chamber (4) upon closure of the mould.

13. Method according to one of the claims 1 to 11, **characterised in that** the foaming agent fluid (22) is supplied finely distributed into the moulding chamber (4).

14. Method according to one of the claims 1 to 13, **characterised in that** foaming agent fluids (22) are used which change gradually from the gas phase into a supercritical state.

15. Method according to one of the claims 1 to 14, **characterised in that** carbon dioxide is used as foaming agent fluid (22).

16. Device for producing thermoplastic and/or thermoelastic moulded articles which are foamed at least in regions by compression moulding in order to implement the method according to one of the claims 1 to 15, having an at least two-part pressure-tight mould (1) delimiting a moulding chamber (4), having an upper (3) and a lower mould (2), at least one supply line (14) for supplying the moulding chamber (4) with a foaming agent fluid (22) and a gas-tight seal (7) disposed in the region of the overlap of upper (3) and lower mould (2), a compression chamber (11) which is disposed outwith the actual moulding chamber (4) and connected to the moulding chamber (4) being provided within the chamber closed by the upper (3) and lower mould (2) in a gas-tight manner, in order to receive the foaming agent fluid (22), and the mould (1) having a controllable pressure release which is locally effective in the closed state.

17. Device according to claim 16, **characterised in that** the supply line (14) has at least one discharge channel (14', 14") which corresponds to the compression chamber (11) outwith the actual moulding chamber (4).

18. Device according to claim 16, **characterised in that** the supply line (14) has at least one distributor (13) which corresponds to the moulding chamber (4).

19. Device according to claim 18, **characterised in that** the distributor (13) comprises a porous material.

20. Device according to claim 18 or 19, **characterised in that** the distributor (13) is a sintered metal insert.

21. Device according to one of the claims 16 to 20, **characterised in that** the supply line (14) has a quantity and pressure control unit, such as a pressure control valve (15).

22. Device according to one of the claims 16 to 21, **characterised in that** the lower (3) and/or upper mould (2) has a moulding core which remains in position upon opening of the mould (1) which releases the pressure.

23. Device according to one of the claims 16 to 21, **characterised in that** the lower (3) and/or upper mould (2) has at least one expansion chamber (17) which can be exposed in the closed state of the mould (1).

24. Device according to claim 23, **characterised in that** a displaceable slide (19) which forms a part of the mould contour of the moulding chamber (4) is disposed in the expansion chamber (17).

25. Device according to claim 24, **characterised in that** the slide (19) is immersed into the expansion chamber (17) in order to release the pressure during penetration and foaming of the plasticate (22).

26. Device according to claim 25, **characterised in that** the slide (17), upon opening of the mould (1), forms the moulding core which remains in position, and can be guided back subsequent to cooling of the moulded article.

27. Device according to one of the claims 16 to 26, **characterised in that** the lower (3) and/or upper mould (2) has a moulding core which penetrates into the still deformable moulded article during foaming.

28. Device according to one of the claims 16 to 27, **characterised in that** fluid channels (8) surrounding the moulding chamber (4) are provided in order to adjust the temperature of the mould (1).

## Revendications

1. Procédé de fabrication de pièces moulées expansées au moins dans certaines zones, à partir de polymères thermoplastiques et/ou thermoélastiques à l'aide d'un outil de façonnage (1) formé au moins de deux parties, selon lequel on introduit dans l'outil de façonnage (1) une matière plastique en polymère (23) contenant éventuellement des fibres de renforcement et un fluide propulseur (22), on façonne la matière plastique (23) sous pression en une pièce moulée, et en fermant l'outil de façonnage (1), on l'expanse d'un état sur-critique en un état sous-critique en faisant passer le fluide propulseur (22),
**caractérisé en ce qu'**
en fermant l'outil de façonnage (1), on fait passer le fluide propulseur sous-critique (22) sous compression dans la chambre de moulage (4) dans un état sur-critique, tout en réglant la pression et la température dans la chambre de moulage (4) de telle sorte que le fluide sur-critique (22) pénètre dans la matière plastique (23) et soit dissout et que le fluide sur-critique (22) passe dans l'état sous-critique en faisant diminuer rapidement la pression pour que la matière plastique (23) soit ainsi expansée et refroidie au moins dans certaines zones en façonnant la pièce moulée.

2. Procédé de fabrication de pièces moulées expansées au moins dans certaines zones, à partir de polymères thermoplastiques et/ou thermoélastiques à l'aide d'un outil de façonnage (1) formé au moins de deux parties, selon lequel on introduit dans l'outil de façonnage (1) un semi-produit en polymère éventuellement en fibres renforcées et un fluide propulseur (22), on plastifie le semi-produit et, en fermant l'outil de façonnage (1), on façonne la matière plastique (23) sous pression en une pièce moulée, et on l'expanse d'un état sur-critique en un état sous-critique en faisant passer le fluide propulseur (22),
**caractérisé en ce qu'**
en fermant l'outil de façonnage (1), on fait passer le fluide propulseur sous-critique (22) sous compression dans la chambre de moulage (4) dans un état sur-critique, tout en réglant la pression et la température dans la chambre de moulage (4) de telle sorte que le fluide sur-critique (22) pénètre dans la matière plastique (23) et soit dissout et que le fluide sur-critique (22) passe dans l'état sous-critique en faisant diminuer rapidement la pression pour que la matière plastique (23) soit ainsi expansée et refroidie au moins dans certaines zones en façonnant la pièce moulée.

3. Procédé selon la revendication 1 ou 2,
**caractérisé en ce qu'**
en fermant l'outil de façonnage (1), la chambre de moulage (4) se réduit pour atteindre un volume inférieur à celui de la pièce moulée finie en tenant compte des conditions sur-critiques pour le fluide propulseur (22) jusqu'à ce que la matière plastique (23) ait atteint entièrement le volume inférieur, ensuite on ouvre l'outil de façonnage (1) en déchargeant la pression et en expansant la matière plastique (23) jusqu'à ce qu'on ait atteint le volume de la pièce moulée finie, puis on refroidit la pièce moulée expansée et on ouvre ensuite l'outil de façonnage (1) complètement.

4. Procédé selon l'une quelconque des revendications 1 à 3,
**caractérisé en ce que**
le fluide propulseur (22) pénètre dans tout le volume de la matière plastique (23) et la matière plastique (23) est expansée en formant une pièce moulée entièrement expansée.

5. Procédé selon l'une quelconque des revendications 1 à 3,
**caractérisé en ce que**
le fluide propulseur (22) pénètre dans des zones discrètes de la matière plastique (23) et la matière plastique (23) est expansée en formant une pièce moulée expansée dans certaines zones.

6. Procédé selon la revendication 5
**caractérisé en ce que**
la matière plastique (23) n'est chargée par le fluide propulseur (22) que localement et de manière délimitée et est expansée dans cette zone (24), alors qu'en dehors de cette zone (24) on produit la pièce moulée finie avec des zones compactes durcies (25).

7. Procédé selon la revendication 5
**caractérisé en ce que**
la matière plastique (23) n'est chargée par le fluide propulseur (22) que dans plusieurs zones (24) séparées localement et est expansée dans ces zones (24), alors qu'entre ces zones (24) on produit la pièce moulée finie avec des zones compactes durcies (25).

8. Procédé selon la revendication 5
**caractérisé en ce que**
le fluide propulseur (22) ne pénètre que dans des zones de bordure de la matière plastique (23), et la matière plastique (2) est expansée en formant une pièce moulée expansée dans la zone de bordure et présentant un noyau compact.

9. Procédé selon l'une quelconque des revendications 1 à 8,
**caractérisé en ce que**
la pression dans la chambre de moulage (4) de l'outil de façonnage (1) n'est déchargée que dans certaines zones pour expanser la pièce moulée dans certaines zones.

10. Procédé selon la revendication 9,
**caractérisé en ce que**
la chambre de moulage (4) de l'outil de façonnage (1) est partiellement agrandie en formant une chambre d'expansion (17) et la matière plastique expansée (23) est expansée dans cette chambre.

11. Procédé selon l'une quelconque des revendications 1 à 10,
**caractérisé en ce que**
la pression dans la chambre de moulage (4) n'est déchargée qu'après avoir formé une peau intégrale en refroidissant la surface supérieure de la matière plastique (23).

12. Procédé selon l'une quelconque des revendications 1 à 11,
**caractérisé en ce que**
le fluide propulseur (22) est introduit à l'extérieur de la chambre de moulage propre (4), mais à l'intérieur d'une chambre de compression (11) fermée par l'outil supérieur (3) et l'outil inférieur (2) et s'écoule dans la chambre de moulage (4) en fermant l'outil de façonnage.

13. Procédé selon l'une quelconque des revendications 1 à 11,
**caractérisé en ce que**
le fluide propulseur (22) est introduit dans la chambre de moulage (4) par une distribution fine.

14. Procédé selon l'une quelconque des revendications 1 à 13,
**caractérisé en ce qu'**
on utilise des fluides propulseurs (22) qui passent de la phase gazeuse en un état sur-critique.

15. Procédé selon l'une quelconque des revendications 1 à 14,
**caractérisé en ce qu'**
on utilise du dioxyde de carbone pour le fluide propulseur (22).

16. Dispositif de fabrication de pièces moulées thermoplastiques et/ou thermoélastiques expansées au moins dans certaines zones à l'aide d'un façonnage par compression, pour mettre en oeuvre le procédé selon l'une quelconque des revendications 1 à 15, comprenant un outil de façonnage étanche à la pression (1), délimitant une chambre de moulage (4) et formé au moins de deux parties avec un outil supérieur (3) et un outil inférieur (2), au moins une conduite d'amenée (14) destinée à charger la chambre de moulage (4) avec un fluide propulseur (22) et une garniture d'étanchéité (7) étanche aux gaz disposée au niveau de la prise supérieure par l'outil supérieur (3) et l'outil inférieur (2), dans lequel, à l'intérieur de la chambre fermée de manière étanche aux gaz par l'outil supérieur (3) et l'outil inférieur (2), une chambre de compression (11) destinée à recevoir le fluide propulseur (22) est reliée à la chambre de moulage (4) et disposée à l'extérieur de la chambre de moulage (4) propre, et dans lequel l'outil de façonnage (1) présente une décharge de pression qui peut être commandée et est efficace localement à l'état fermé.

17. Dispositif selon la revendication 16,
**caractérisé en ce que**
la conduite d'amenée (14) présente au moins un canal d'embouchure (14', 14") correspondant avec la chambre de compression (11) à l'extérieur de la chambre de moulage (4) propre.

18. Dispositif selon la revendication 16,
**caractérisé en ce que**
la conduite d'amenée (14) présente au moins un distributeur (13) correspondant avec la chambre de moulage (4).

19. Dispositif selon la revendication 18,
**caractérisé en ce que**
le distributeur (13) se compose d'un matériau poreux.

20. Dispositif selon la revendication 18,
**caractérisé en ce que**
le distributeur (13) est un insert en métal fritté.

21. Dispositif selon l'une quelconque des revendications 16 à 20,
**caractérisé en ce que**
la conduite d'amenée (14) présente une commande de quantité et de pression, telle qu'une soupape de commande de pression (15).

22. Dispositif selon l'une quelconque des revendications 16 à 21,
**caractérisé en ce que**
l'outil inférieur (2) et/ou l'outil supérieur (3) présente(nt) un noyau de moulage restant en position lorsque l'outil de façonnage (1) est ouvert par une décharge de pression.

23. Dispositif selon l'une quelconque des revendications 16 à 21,
**caractérisé en ce que**
l'outil inférieur (2) et/ou l'outil supérieur (3) présente(nt) au moins une chambre d'expansion (17) pouvant être placée librement lorsque l'outil de façonnage (1) est à l'état fermé.

24. Dispositif selon la revendication 23,
**caractérisé en ce que**
dans la chambre d'expansion (17), est disposé un coulisseau (19) mobile, formant une partie du contour du moule de la chambre de moulage (4).

25. Dispositif selon la revendication 24,
**caractérisé en ce que**
le coulisseau (19) plonge dans la chambre d'expansion (17) pour décharger la pression lorsque la matière plastique (22) pénètre et est expansée.

26. Dispositif selon la revendication 25,
**caractérisé en ce que**
le coulisseau (17) forme le noyau de moulage restant en position lorsque l'outil de façonnage (1) est ouvert et peut être redirigé une fois que la pièce moulée est refroidie.

27. Dispositif selon l'une quelconque des revendications 16 à 26,
**caractérisé en ce que**
l'outil inférieur (2) et/ou l'outil supérieur (3) présente(nt) un noyau de moulage pénétrant dans la pièce moulée qui peut encore être déformé pendant l'expansion.

28. Dispositif selon l'une quelconque des revendications 16 à 27,
**caractérisé en ce qu'**
on prévoit des canaux de fluide (8) entourant la chambre de moulage (4) pour mettre l'outil de façonnage (1) à température.
